# NOUVEAU FASCICULE DE BREVET EUROPEEN

(11) **EP 2 150 404 B2**
(45) Date de publication et mention de la décision concernant l'opposition: **01.01.2020**
(45) Mention de la délivrance du brevet: 21.06.2017
(21) Numéro de dépôt: 08759969.2
(22) Date de dépôt: 23.05.2008
(51) Int. Cl.: B32B 17/06, C03C 27/12, C09K 21/02, C09D 1/04, C01B 33/14, C01B 33/32

(54) **VITRAGE ANTI-FEU**
FEUERFESTE VERGLASUNG
FIREPROOF GLAZING

(30) Priorité: 25.05.2007 EP 07108971
(43) Date de publication de la demande: 10.02.2010
(73) Titulaire: AGC Glass Europe, 1348 Louvain-la-Neuve (BE)
(72) Inventeur: DURY, Bertrand, B-6040 Jumet (BE); GOELFF, Pierre, B-6040 Jumet (BE)
(74) Mandataire: Le Vaguerèse, Sylvain Jacques
(86) Numéro de dépôt international: PCT/EP2008/056368
(87) Numéro de publication internationale: WO 2008/145611

(56) Documents cités:
- EP-A- 1 431 027
- EP-A1- 0 620 781
- WO-A1-2006/092426
- WO-A1-2008/053248
- DE-A1- 19 720 269
- DE-A1-102004 031 785
- FR-A- 2 561 171
- FR-A- 2 607 491
- JP-A- H04 219 352
- US-A- 2 601 352
- US-A- 5 565 273

## Description

La présente invention concerne les vitrages anti-feu comprenant au moins une couche d'un silicate alcalin hydraté dont l'exposition au feu engendre la formation d'une mousse opaque qui s'oppose à la transmission des radiations et maintient les feuilles de verre auxquelles la ou les couches de silicate alcalin sont associées.

L'utilisation des silicates alcalins hydratés dans la fabrication des vitrages anti-feu s'effectue selon deux modes distincts.

Le premier mode comprend les produits dans lesquels la, ou les couches de silicates sont formées à partir de solutions commerciales de ces silicates, solutions auxquelles sont ajoutés des additifs divers qui en améliorent les propriétés et/ou les conditions de mise en oeuvre. Partant de ces solutions les couches sont obtenues en répandant la solution sur un support et en procédant à un séchage plus ou moins prolongé jusqu'à obtention d'une couche solide. La couche de silicate ainsi formée, éventuellement directement sur une feuille de verre, est ensuite incluse dans un ensemble feuilleté entre deux feuilles de verre.

Pour cette première famille de produits les conditions de préparation, et particulièrement celles de séchage sont relativement contraignantes.

Le choix de la voie du séchage à partir de silicates alcalins industriels a également des conséquences pour ce qui concerne les qualités mécaniques des vitrages incorporant ces couches de silicates. La faible teneur en eau choisie pour éviter l'altération dans le temps des propriétés de transparence, ne permet pas d'avoir des couches très "plastiques". La conséquence est une limitation de la résistance dite "au choc mou", résistance qui est nécessaire dans certaines applications notamment dans les vitrages extérieurs, et qui doit être compensée par une structure particulière, par exemple par association avec des feuilles stratifiées comportant un intercalaire d'un matériau thermoplastique, ou encore le plus souvent par l'adjonction de composés qui accroissent la plasticité de la couche intumescente. Pour produits plastifiants on utilise le plus souvent des polyols, notamment des glycols. La présence de ces derniers est relativement importante pour les teneurs en eau les plus faibles. Ainsi pour des teneurs en eau de l'ordre de 20 à 25% en poids il est usuel d'introduire de l'ordre de 15% en poids ou plus d'éthylène glycol ou de glycérine. La présence de quantités telles de produits organiques n'est pas avantageuse pour ce qui concerne le comportement au feu. Ils conduisent à la carbonisation et au dégagement de fumées indésirables.

Le second mode traditionnel concerne les produits dans lesquels une solution de silicate à teneur en eau relativement élevée, est figée par l'addition de produits qualifiés de "durcisseurs", "d'agents de réticulation" ou d'autre façon encore. Ces qualificatifs désignent de façon générique des produits qui favorisent la gélification de la solution de silicate. Ils sont choisis soigneusement, de sorte qu'après leur addition à la solution de silicate, cette dernière laissée au repos durcit spontanément dans un temps relativement bref, sans qu'il soit nécessaire de procéder à un séchage.

Pour ces produits, avant formation du gel, la solution avec ses additifs est coulée entre deux feuilles de verre délimitant un espace clos. Un joint situé à la périphérie des feuilles de verre les associe de façon étanche et maintient la solution pendant sa gélification.

L'absence de séchage constitue un avantage certain pour ce qui concerne le mode de production. Les produits en question conservent bien évidemment une teneur en eau relativement élevée. Cette teneur est choisie de telle sorte que la solution de silicate ne puisse pas donner lieu à une gélification prématurée rendant impossible sa mise en oeuvre ultérieure. La stabilité dans le temps de ces solutions est en effet fonction de cette teneur en eau.

De façon typique les compositions mises en oeuvre sans séchage antérieures, ont une teneur en eau de l'ordre de 47-48% en poids. Les publications à ce sujet, ne proposent pas de composition présentant une teneur en eau inférieure à 44%, pour la raison qu'une teneur en eau moindre conduisait à une composition dont la fluidité ne pouvait être garantie un temps suffisant ("pot life").

Il convient de préciser que par tenure en eau on désigne celle qui peut être déterminée par évaporation complète. Cette teneur ne tient pas compte de la manière dont l'eau est éventuellement dans ces compositions de silicates "hydratés".

La présence de cette eau relativement abondante peut conduire à un manque de cohésion du vitrage. Soumis à des efforts de cisaillement dans le plan du vitrage, les feuilles de verre, même à température ordinaire sont susceptibles de se jouer les unes par rapport aux autres.

La teneur en eau élevée peut aussi produire une "mousse" très irrégulière, nuisible à l'intégrité de la feuille soumise à l'épreuve du feu. Pour que ces produits présentent les qualités "mécaniques" requises à l'épreuve au feu, il est fait usage de moyens qui compensent les propriétés insuffisantes de la couche intumescente. Par exemple à la place de feuilles de verre recuit, il est fait usage de verre trempé. Cette solution accroît le coût des produits mais surtout nécessite la production aux dimensions finales requises, le découpage ultérieur n'étant pas possible.

Par ailleurs de fortes proportions d'eau dans la couche intumescente nécessitent de renforcer la protection des bords pour éviter une altération dans le temps, consécutive par exemple à un assèchement progressif à partir de ces bords.

Un but de l'invention est de proposer la formation de vitrages anti-feu comprenant des couches intumescentes qui puissent être formées sans séchage, et sans pour autant que ces couches conservent une teneur en eau telle qu'elle conduise aux insuffisances, notamment relatives à la tenue au feu, indiquées ci-dessus.

Un but de l'invention est de proposer la formation de vitrages dont la ou les couches intumescentes offrent un caractère réfractaire relativement élevé.

Un autre but de l'invention est notamment de proposer la formation de tels vitrages dans les couches intumescentes desquelles la teneur en eau reste suffisante pour garantir une plasticité adéquate.

Un autre but de l'invention est de faire en sorte que la teneur en eau n'entraîne pas de détérioration des propriétés optiques, en particulier ne conduise pas à la présence d'un "haze".

Les inventeurs ont montré qu'il était possible d'obtenir des compositions fluides de silicates alcalins qui durcissent sans séchage, et dont la teneur en eau peut être sensiblement moindre que celles des compositions analogues de l'art antérieur. L'obtention de ces propriétés, selon l'invention, est liée au mode de préparation de la composition. Cette préparation comporte systématiquement comme matières fournissant de la silice, au moins pour partie, des suspensions de particules de silice colloïdale dont la taille des particules est bien spécifique.

Dans la pratique les inventeurs ont mis en évidence la relation existant entre le comportement rhéologique des compositions de silicates alcalins et les dimensions de particules de silice entrant dans ces compositions. Les modes de préparation de ces compositions de silicates font également partie de l'invention.

Le mode traditionnel de préparation des couches intumescentes, avec ou sans séchage comporte l'utilisation de solutions de silicates alcalins industriels comme composé de base. Ces solutions présentent des caractéristiques qui en limitent les possibilités d'utilisation. En particulier elles présentent des teneurs en eau relativement élevées, et ces teneurs sont d'autant plus importantes que le rapport molaire SiO₂/M₂O est lui-même plus important.

A titre indicatif la teneur en eau des solutions commerciales de silicates alcalins est de l'ordre de 65% en poids pour un rapport molaire de 3,3, et de l'ordre de 45% pour un rapport molaire de 2. Ces solutions industrielles sont ajustées pour maintenir une viscosité adéquate pour leurs utilisateurs. Aux valeurs indiquées ci-dessus, la viscosité se situe à environ 100mPa.s.

Pour les vitrages anti-feu, des rapports molaires plus importants sont préférables pour améliorer le caractère réfractaire. Il apparaît donc que les silicates alcalins du commerce ne sont pas utilisables, ou pas utilisables tels quels pour la préparation des compositions intumescentes, notamment lorsqu'il s'agit de produit dont on veut éviter le séchage, les teneurs en eau étant beaucoup trop élevées.

En pratique selon l'invention les couches intumescentes produites et utilisées dans les vitrages anti-feu, présentent avantageusement un rapport molaire SiO₂/M₂O compris entre 3 et 8, et de préférence entre 3,5 et 6, et de façon particulièrement préférée entre 3,5 et 5, et leur teneur en eau s'établit entre 30 et 48% et de préférence entre 35 et 43%.

Selon le mode d'application conduisant aux vitrages, à savoir soit par coulée entre deux feuilles constituant une sorte de récipient de la composition liquide, le durcissement s'effectuant entre les feuilles, soit en appliquant la solution sur une feuille horizontale, une seconde feuille de verre étant appliquée ultérieurement sur la couche intumescente lorsque le durcissement est commencé ou même achevé, la teneur en eau peut être plus ou moins importante.

La mise en oeuvre entre deux feuilles requiert de préférence une teneur en eau un peu plus élevée pour maintenir une faible viscosité qui facilite l'élimination éventuelle de bulles. De façon particulièrement préférée dans ce cas la teneur en eau est de 40 à 43% en poids. Dans le cas où la solution est étalée sur la feuille en position horizontale, la viscosité de la composition peut être un peu plus importante et en conséquence la teneur en eau est avantageusement moindre, et se situe de façon particulièrement préférée de 35 à 41%.

Dans tous les cas, les solutions commerciales de silicates alcalins ne peuvent être utilisées telles quelles. Compte tenu des différences importantes existant entre ces compositions et celles qui sont mises en oeuvre pour la formation des couches selon l'invention, il peut être préférable de procéder à la préparation de ces dernières sans utiliser, même pour partie, les solutions industrielles.

Pour préparer les compositions utilisées il est avantageux de partir de suspensions de silice colloïdale et d'hydroxyde alcalin. Ce dernier est soit sous forme de solution, soit au moins en partie sous forme de pastilles solides pour limiter le plus possible la teneur en eau du mélange. Les concentrations des solutions d'hydroxyde peuvent être relativement élevées. La teneur pondérale en oxydes métalliques peut atteindre 50% dans les solutions. Elle peut être de 85% dans les pastilles. Si les suspensions de silice ne dépassent pas ordinairement 50% en poids de silice, les compositions obtenues par réaction de ces suspensions avec l'hydroxyde alcalin peuvent présenter une teneur en eau sensiblement moindre que celle des silicates industriels et ceci avec des rapports molaires SiO₂/M₂O bien plus élevés. Par ailleurs la reproductibilité des compositions, et la régularité des propriétés des produits obtenus sont d'autant mieux assurées par ce mode de préparation.

Si néanmoins pour des raisons d'économie, il est préféré d'utiliser au moins partiellement des silicates industriels, il reste nécessaire de les modifier par un apport substantiel de silice colloïdale pour parvenir aux compositions présentant les rapports molaires recherchés sans avoir à éliminer une quantité d'eau excessive.

Dans tous les cas la préparation des compositions des silicates alcalins utilisée dans la formation des couches intumescentes sans séchage passe par l'utilisation de suspensions de silice colloïdale. Selon l'invention la proportion de silice provenant de ces suspensions de silice colloïdale dans le matériau intumescent est avantageusement d'au moins 50%, de préférence d'au moins 60%, et de façon particulièrement préférée d'au moins 70%. La silice présente peut provenir en totalité de suspensions colloïdales.

Les inventeurs ont constaté que le durcissement des solutions de silicates alcalins dans la préparation desquelles intervient l'utilisation de suspension de silice, la composition étant par ailleurs identique, dépend pour partie au moins de la dimension des particules de silice utilisées.

De façon générale, il est apparu à l'expérience que l'accroissement des dimensions des particules, dans certaines limites, permet de retarder la prise en masse de la composition. Par voie de conséquence, les compositions dans lesquelles la dimension des particules de silice est accrue, peuvent présenter une teneur en eau réduite par rapport aux compositions de l'art antérieur, tout en conservant la fluidité requise pendant un temps suffisant pour l'utilisation dans les conditions habituelles.

Si les compositions antérieures utilisables ne permettaient pas de descendre en dessous d'une teneur en eau de 44%, et en pratique ne descendaient pas en dessous de 47-48%, l'utilisation selon l'invention de silice présentant des particules de dimensions telles qu'enseignées par l'invention, permet d'atteindre des teneurs en eau bien inférieures, pouvant aller jusqu'à 30% en poids, tout en conservant les propriétés rhéologiques nécessaires.

Les mécanismes qui conduisent à ces propriétés ne sont pas entièrement élucidés. Ils mettent en oeuvre des phénomènes complexes associant les particules de silice au sein de la composition. La formation d'agrégats plus ou moins structurés, semble dépendre de l'environnement immédiat des particules susceptibles de se lier les unes aux autres. Le réseau constitué serait d'autant plus "serré", et donc la composition moins fluide, que les liaisons sont plus nombreuses. A quantité de silice constante, la surface disponible pour la formation de ces liaisons est d'autant plus grande que les particules sont plus petites. Autrement dit la formation du réseau conduisant à la prise en masse de la composition est favorisé par la présence des petites particules.

Il va de soi que l'accroissement des dimensions des particules est limité. Au-delà d'une certaine dimension les compositions ne présentent plus les propriétés optiques requises, et en particulier la transparence. Des dimensions trop importantes conduisent à une diffusion de la lumière, ou selon les termes usuels, à la formation d'un voile ("haze").

En pratique les particules de silice utilisées pour la formation des compositions de silicates alcalins ont un diamètre moyen supérieur à 50nm. Ces particules ont aussi des dimensions moyennes qui ne dépassent pas 150nm et de préférence pas 130nm. Le diamètre moyen particulièrement préféré se situe entre 60 et 120nm.

Les dimensions des particules d'une même suspension de silice sont ordinairement bien homogènes. Une part qui n'est pas inférieure à 80% en poids des particules se situe dans l'intervalle de ±10% du diamètre moyen.

Les dimensions des particules de silice dans les suspensions utilisées, apparaissent bien définies à l'observation en optique électronique. La mesure de ces dimensions, en dehors de l'observation optique, peut encore être faite par examen électro-acoustique (en utilisant par exemple un appareil de type "Acoustosizer"), par spectroscopie de corrélation de photons (en utilisant par exemple un appareil de type "Coulter Delsa 440SX"), ou encore par centrifugation.

Selon le mode de préparation adopté, et selon la teneur en eau recherchée dans la composition finale, une fois le mélange des constituants réalisé, il peut être nécessaire de procéder à un ajustement de la teneur en eau. Pour cela, une déshydratation peut être mise en oeuvre. Dans tous les cas, il est bien entendu préférable de faire en sorte que le mélange des différents constituants aboutisse à une composition dont la teneur en eau soit celle de la composition de la couche intumescente finale, ou au moins soit aussi voisine que possible de celle-ci. Avantageusement, et pour limiter l'opération de déshydratation éventuelle, la teneur en eau dans la composition telle que préparée, n'est pas supérieure à 50% en poids.

Lorsque la déshydratation est nécessaire, elle est faite avantageusement en soumettant le produit à une évaporation sous pression partielle. La déshydratation dans ce cas présente l'avantage de conduire simultanément au dégazage du produit. On prévient ainsi le risque d'entraînement de bulles dans la couche préparée à partir de cette composition.

La déshydratation peut être faite à température ambiante. Une température légèrement plus haute peut accélérer l'élimination de l'eau. Toutefois ce réchauffement de la composition doit rester très limité pour éviter tout risque de prise en masse anticipée. En pratique la température ne dépasse pas 60°C.

Après ajustement de la teneur en eau, la composition peut être conservée pendant plusieurs heures ou même plusieurs jours à température ambiante avant son utilisation. Lorsque les conditions de préparation, et en particulier lorsque le choix des particules de silice est effectué selon les modalités de l'invention, la composition peut être conservée au moins 48h. Si le temps de conservation doit être prolongé bien au-delà, il est préférable pour éviter tout risque de prise en masse, de réfrigérer la composition par exemple aux environs de 4°C. A ces températures le "pot life" peut être très largement accru.

La couche intumescente est principalement composée de silicates alcalins et d'eau. Les silicates sont ceux ce potassium, sodium et lithium. Il est possible d'avoir un mélange de ces silicates, néanmoins un tel mélange n'est pas préféré pour la raison qu'il conduit à des couches dont la température de ramollissement est abaissée.

Les silicates de potassium sont préférés. Ils représentent avantageusement au moins 60% en poids de l'ensemble des silicates, et de préférence au moins 80%. De façon particulièrement préférée, la totalité des silicates utilisés, aux impuretés inévitables près, autrement dit plus de 95% en poids, est constituée de silicate de potassium.

En dehors des silicates et de l'eau, divers additifs peuvent être introduits dans la composition, notamment des polyols, et en particulier de l'éthylène glycol ou de la glycérine.

Dans les produits intumescents séchés de l'art antérieur, l'introduction de ces polyols est destinée notamment à compenser le manque de plasticité des produits dont la teneur en eau est très faible (de 20 à 25%). La teneur en polyols peut alors s'élever jusqu'à 18-20% en poids dans la couche formée. Dans les couches intumescentes préparées selon l'invention, lorsque des polyols sont présents, leur teneur reste beaucoup plus faible. Elle n'est pas supérieure à 10% en poids de la composition, et de préférence pas supérieure à 8%.

Des teneurs préférées en glycols, notamment en éthylène-glycol ou glycérine, sont comprises entre 2 et 6% en poids de la couche finale.

Traditionnellement les compositions intumescentes comportent encore d'autres additifs en faibles proportions. Il s'agit de produits azotés (urée, amines...) ou encore d'agents tensio-actifs.

Avantageusement les compositions contiennent de l'hydroxyde de tetra-methyl ammonium (TMAH) à une teneur qui n'est pas supérieure à 2% en poids.

La solution préparée est suffisamment stable aux conditions de température ambiante ordinaires. Elle peut être stockée pendant plusieurs heures, voire plusieurs jours au besoin en la refroidissant, sans risque de formation d'un gel. Il est possible de mettre à profit cette stabilité pour éliminer les bulles qui peuvent être apparues dans le brassage du mélange. L'élimination peut intervenir en laissant simplement la solution au repos ou par toute technique connue telle que l'utilisation d'ultrasons ou le dégazage sous pression partielle par exemple.

Un but de l'invention, comme indiqué précédemment, est de proposer une composition intumescente qui ne nécessite aucun séchage pour parvenir au durcissement. Cette particularité, en dehors du gain qu'elle apporte dans la conduite de la production des vitrages, permet aussi la constitution de couches intumescentes dont l'épaisseur n'est pas limitée. Précédemment cette épaisseur tenait compte de la longueur du temps de séchage. En pratique ce temps croissant comme le carré de l'épaisseur, pour rester dans des limites acceptables industriellement, l'épaisseur des couches séchées ne dépassait pas ordinairement 2mm. L'utilisation de couches durcissant sans séchage permet de produire des couches beaucoup plus épaisses.

De façon pratique, pour certains vitrages il peut être utile de former des couches selon l'invention d'une épaisseur allant jusqu'à 8mm, voire même 10mm ou plus.

L'utilisation de couches épaisses peut conduire à des produits sensiblement différents de ceux habituellement disponibles. Par exemple les qualités de tenue au feu qui conduisent dans les techniques traditionnelles à accroître le nombre de couches et simultanément des feuilles de verre qui les supportent, peuvent être remplacées par des couches plus épaisses et un nombre de feuille de verre moindre. Autrement dit, il est possible par ce biais de réduire l'épaisseur, le poids et le coût du vitrage pour une même qualité finale.

La production des vitrages selon l'invention est représentée de façon schématique aux figures annexées dans lesquelles:
- la figure 1 est une vue schématique en perspective d'un vitrage anti-feu élémentaire selon l'invention
- la figure 2 est un diagramme d'un mode de production de la composition intumescente selon l'invention;
- la figure 3 est un diagramme d'un autre mode de production de la composition intumescente selon l'invention ;
- la figure 4 est un diagramme illustrant deux modes de formation de vitrages selon l'invention.

L'élément de base des vitrages anti-feu transparents est constitué systématiquement d'une couche intumescente 3, prise entre deux feuilles de verre 1 et 2. Les feuilles de verre sont comme représentées monolithiques ou le cas échéant constituées d'un ensemble feuilleté incluant une feuille intercalaire par exemple de type butyral de polyvinyl (PVB).

Sur la base de cet élément les vitrages anti-feu commercialisés sont développés notamment en associant dans un même ensemble plusieurs couches intumescentes et plusieurs feuilles de verre, identiques ou différentes selon l'usage envisagé. Dans la pratique, la multiplication des couches a pour but notamment d'accroître les caractéristiques de résistance au feu, les multiples couches intumescentes additionnant leurs effets. De tels assemblages sont avantageusement remplacés par d'autres dans lesquels les couches sont plus épaisses, le mode de formation sans séchage se prêtant bien pour les raisons indiquées plus haut à la formation de couches épaisses.

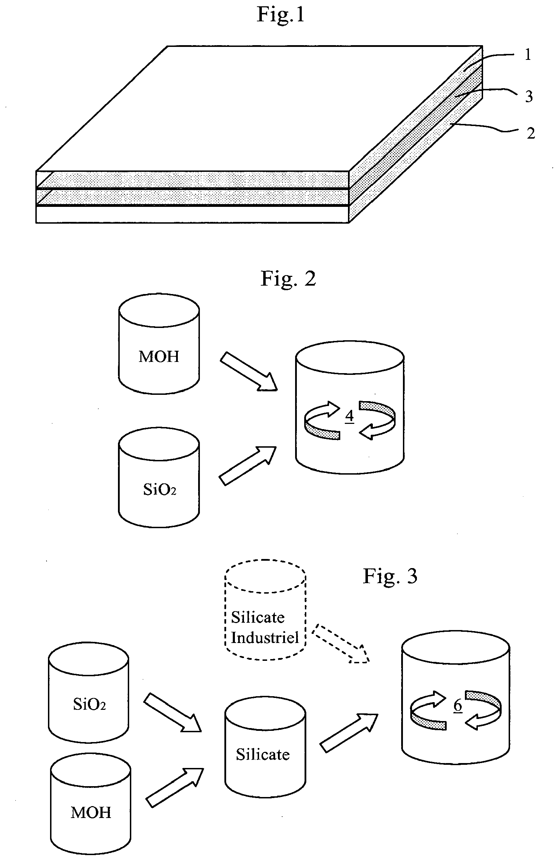

La figure 2 présente de façon schématique un mode de préparation de la composition intumescente. Selon le mode préféré la composition de silicate est formée à partir d'un mélange d'hydroxyde alcalin MOH et d'une suspension de particules de silice SiO₂. A ces constituants de base s'ajoutent le cas échéant les additifs notamment les glycols, les tensio-actifs etc.

Le mélange est effectué pour parvenir aux compositions adéquates selon l'invention à savoir une teneur en eau (compte non tenu des additifs organiques éventuels) aussi faible que possible et voisine de 50% ou moins, avec un rapport molaire relativement élevé comme indiqué précédemment. Le mélange est effectué sous agitation pour bien homogénéiser la composition comme représenté.

La composition 4 est dégazée pour éliminer les bulles éventuellement présentes après ce mélange. Elle est éventuellement soumise à une déshydratation pour ajuster la teneur en eau.

La composition intumescente est stable à la température ordinaire. Elle l'est encore davantage conservée à environ 4°C.

La figure 3 illustre la variante dans laquelle une part de la silice de la composition provient de solution de silicates industriels. Comme précédemment une part d'au moins 50% de la silice est constituée de silice colloïdale répondant aux caractéristiques énoncées. La composition obtenue 6 présente ordinairement une teneur en eau plus important que dans le cas précédent. Il convient alors de procéder systématiquement à une déshydratation.

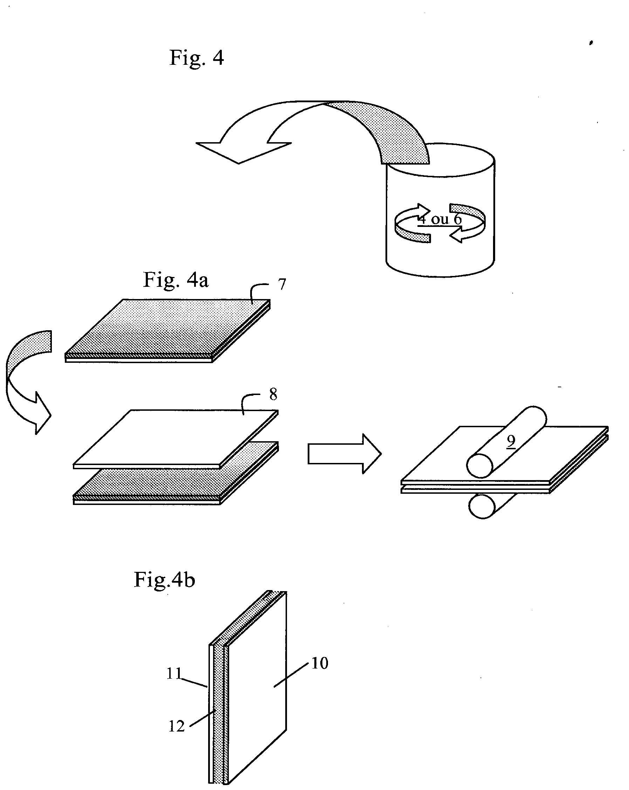

La figure 4 montre deux manières d'utilisation des compositions intumescentes préparées.

A la figure 4a, la composition liquide est appliquée sur une feuille de verre 5 maintenue horizontale. La couche de composition liquide 7 durcit sans séchage sur cette feuille. Une deuxième feuille de verre 8 vient recouvrir la couche 7 pendant ou après durcissement.

La prise en masse de la composition intumescente intervient spontanément. Elle est cependant avantageusement accélérée par chauffage à température modérée. Ce chauffage est effectué de préférence à moins de 80°C.

Pour améliorer l'adhérence de la couche intumescente à la feuille de verre il est aussi possible d'appliquer sur celle-ci, ou encore d'introduire dans la composition, des composés favorisant cette adhérence. Il s'agit par exemple de silanes comportant éventuellement des groupes fonctionnels tels les amino-silanes.

L'opération de superposition des feuilles de verre et des couches intumescentes comprend éventuellement plusieurs couches intumescentes et autant de feuilles de verre supplémentaires. Ces couches intumescentes et feuilles de verre sont identiques ou différentes selon les applications envisagées.

L'assemblage final est conduit avantageusement par calandrage entre des rouleaux comme indiqué en 9. On peut également procéder à un passage à l'autoclave. La température de l'autoclave est assortie à la pression mise en oeuvre. A titre indicatif sous 13 atmosphères relatives, la température ne dépasse pas 130°C.

Dans la manière présentée à la figure 4b, la composition intumescente est versée dans l'espace délimité par deux feuilles de verre 10 et 11 réunies sur leurs bords par un cordon de matériau 12 qui rend cet espace étanche. Comme précédemment la composition durcit sans séchage entre les feuilles de verre.

L"application de la composition peut aussi être effectuée sur un support continu, la couche étant alors récupérée sous forme d'un ruban. La solution de silicate préparée comme précédemment est versée sur le convoyeur horizontal, de façon préférée constitué d'un matériau polymère non adhérant à la feuille de silicate préparée. Le convoyeur ainsi revêtu passe avantageusement dans un four accélérant le durcissement. La feuille intumescente durcie est séparée du tapis convoyeur et éventuellement enroulée sur elle même. Pour éviter que les spires n'adhèrent les unes aux autres la feuille peut être "interfoliée avec une feuille intercalaire pendant le stockage. La feuille intumescente ainsi préparée peut être assemblée ultérieurement avec des feuilles de verre comme précédemment.

L'incidence de la dimension des particules de silice des suspensions colloïdales sur le temps de prise en masse et sur la qualité optique des compositions est l'objet des essais suivants.

Deux type de suspensions de silice sont utilisées qui présentent chacune la même teneur en silice de 50% en poids de la suspension. L'une des suspensions comporte des particules dont le diamètre moyen est de 30nm, l'autre des particules de diamètre moyen 70nm, autrement dit dont la surface spécifique est moins de 4 fois celle de la première suspension.

Le mélange formé est de 50% en poids de la suspension de silice et de 50% en poids de solution de KOH à 50%. Le mélange additionné le cas échéant de la quantité d'éthylène glycol (EG) ou de glycérine (G), et de TMHA (T) est soumis à un dégazage et une légère déshydratation jusqu'à obtenir les teneurs en eau indiquées dans le tableau suivant.

Le mélange constitué est observé pour ses qualités optiques et pour le maintien de sa fluidité. La limite de viscosité que l'on se fixe comme suffisante pour permettre l'utilisation de la composition ("pot life") est de 100mPa.s.

| Composition apparente | | | | | Durée de vie en pot à 20°C | |
|---|---|---|---|---|---|---|
| Rₘ | EG | G | T | Eau | Diamètre des particules du vecteur de SiO₂ | |
| SiO₂/K₂O | % | % | % | % | 30nm | 70nm |
| 3.8 | 4 | 0 | 1 | 50 | < 4h | > 48h |
| | 4 | 0 | 1 | 48 | < 4h | > 40h |
| | 4 | 0 | 1 | 46 | < 4h | > 36h |
| | 4 | 0 | 1 | 40 | pas transparent | > 8h |
| | 4 | 0 | 1 | 38 | pas transparent | > 8h |
| 4.6 | 4 | 0 | 1 | 38 | pas transparent | > 8h |
| | 0 | 7 | 1 | 38 | pas transparent | > 8h |

On constate que dans tous les cas, les compositions comprenant la silice dont les particules sont de diamètre 70nm présente une durée de conservation à l'état liquide très supérieur à celle des compositions similaires dans lesquelles les particules de silice sont seulement de 30nm. De plus les solutions à faible teneur en eau (38% en poids) pour les compositions selon l'invention restent bien transparentes alors que celle des exemples comparatifs ne le sont plus.

## Revendications

1. Procédé de production de vitrage anti-feu transparent comprenant au moins une couche de matériau intumescent comprise entre des feuilles de verre, dans lequel la couche intumescente obtenue sans séchage est une couche de silicate alcalin hydraté de teneur en eau comprise entre 30 et 48% en poids, de rapport molaire SiO₂/M₂O compris entre 3 et 8, silicate alcalin dans la préparation duquel la silice est au moins partiellement introduite sous forme de suspension aqueuse de particules de silice dont la granulométrie moyenne est supérieure à 50nm et inférieure à 150nm, et de préférence inférieure à 130nm, la couche intumescente contenant aussi des polyols en proportion inférieure à 10% en poids, et de préférence inférieure à 8%.

2. Procédé selon la revendication précédente dans lequel la proportion de silice ajoutée présentant les caractéristiques granulométriques indiquées, par rapport à l'ensemble de la silice présente dans la couche intumescente est d'au moins 50% en poids et de préférence d'au moins 60% en poids.

3. Procédé selon l'une des revendications précédentes dans lequel la couche intumescente présente une teneur en eau comprise entre comprise entre 35 et 43% en poids.

4. Procédé selon l'une des revendications précédentes dans lequel, dans la couche intumescente, le rapport molaire SiO₂/M₂O de la couche intumescente est compris entre 3,5 et 6.

5. Procédé selon l'une des revendications précédentes dans lequel, dans la couche intumescente, le composant alcalin est le sodium, le potassium, le lithium ou un mélange de plusieurs d'entre eux.

6. Procédé selon la revendication 5 dans lequel le composant alcalin est constitué pour au moins 60% en poids de potassium et de préférence d'au moins 80%.

7. Procédé selon la revendication 6 dans lequel la totalité du composant alcalin est du potassium.

8. Procédé selon l'une des revendications précédentes dans lequel l'adhérence de la couche intumescente aux feuilles de verre avec lesquelles elle est en contact est favorisée par application de promoteurs d'adhérence sur ces feuilles ou par incorporation de ces promoteurs dans la composition intumescente.

9. Procédé selon la revendication 8 dans lequel les promoteurs d'adhérence sont des silanes ou des silanes à groupes fonctionnels du type amino-silanes.

10. Procédé de préparation de vitrage anti-feu selon l'une des revendications précédentes dans lequel la couche intumescente est formée :
- soit à partir d'une solution d'hydroxyde alcalin à laquelle on ajoute une suspension aqueuse de silice dont les particules présentent la granulométrie appropriée ;
- soit à partir d'une solution de silicate alcalin à laquelle est ajoutée une quantité de suspension aqueuse de silice dont les particules présentent la granulométrie appropriée ;
- soit à partir d'un ensemble comprenant pour partie une solution de silicate alcalin, pour partie une solution d'hydroxyde alcalin, auxquelles est ajoutée la suspension de silice dont les particules présentent la granulométrie appropriée.

11. Procédé selon la revendication 10 dans lequel la composition de silicates alcalins hydratés dans laquelle tous les composants sont réunis, est appliquée sur une feuille de verre horizontale selon l'épaisseur souhaitée, la solution étant laissée à prendre en masse, une deuxième feuille de verre étant appliquée sur la couche durcie, l'ensemble étant assemblé par calandrage et/ou passage à l'étuve.

12. Procédé selon la revendication 10 dans lequel la composition de silicates alcalins hydratés est versée dans l'espace ménagé entre deux feuilles de verre à la périphérie desquelles est disposé un cordon étanche, la composition durcissant dans cet espace.

13. Procédé selon la revendication 11 ou la revendication 12 dans lequel la prise en masse de la solution intumescente est accélérée par chauffage à une température n'excédant pas 80°C.

14. Procédé selon la revendication 11 ou la revendication 12, dans lequel la prise en masse de la solution est obtenue par passage à l'autoclave à une température ne dépassant pas 130°C sous une pression de 13 atmosphères.

## Patentansprüche

1. Verfahren zur Herstellung einer transparenten feuerfesten Verglasung, die mindestens eine Schicht aus intumeszierendem Material aufweist, das zwischen Glasscheiben angeordnet ist, wobei die intumeszierende Schicht, die ohne Trocknung erhalten wird, eine Schicht aus hydratisiertem Alkalisilikat mit einem Wassergehalt, der zwischen 30 und 48 Gew.-% liegt, einem Molverhältnis SiO₂:M₂O, das zwischen 3 und 8 liegt, ist, Alkalisilikat, in dessen Zubereitung das Siliziumdioxid mindestens teilweise in Form von einer wässrigen Suspension von Siliziumdioxidteilchen eingebracht wird, deren durchschnittliche Teilchengröße größer als 50 nm und niedriger als 150 nm, und vorzugsweise niedriger als 130 nm ist, wobei die intumeszierende Schicht auch Polyole in einem Anteil von weniger als 10 Gew.-% und vorzugsweise von weniger als 8 Gew.-% enthält.

2. Verfahren nach dem vorhergehenden Anspruch, wobei der hinzugefügte Anteil von Siliziumdioxid, der die angegebenen granulometrischen Eigenschaften aufweist, gegenüber der Gesamtheit des Siliziumoxids, das in der intumeszierenden Schicht vorhanden ist, mindestens 50 Gew.-% und vorzugsweise 60 Gew.-% beträgt.

3. Verfahren nach einem der vorhergehenden Ansprüche, wobei die intumeszierende Schicht einen Wassergehalt aufweist, der zwischen 35 und 43 Gew.-% liegt.

4. Verfahren nach einem der vorhergehenden Ansprüche, wobei in der intumeszierenden Schicht das Molverhältnis SiO₂:M₂O der intumeszierenden Schicht zwischen 3,5 und 6 liegt.

5. Verfahren nach einem der vorhergehenden Ansprüche, wobei in der intumeszierenden Schicht die alkalische Komponente Natrium, Kalium, Lithium oder eine Mischung aus mehreren von ihnen ist.

6. Verfahren nach Anspruch 5, wobei die alkalische Komponente für mindestens 60 Gew.-% und vorzugsweise für mindestens 80 Gew.-% aus Kalium gebildet ist.

7. Verfahren nach Anspruch 6, wobei die Gesamtheit der alkalischen Komponente Kalium ist.

8. Verfahren nach einem der vorhergehenden Ansprüche, wobei die Haftfähigkeit der intumeszierenden Schicht an den Glasscheiben, mit denen sie in Kontakt ist, durch Aufbringen von Haftvermittlern auf diesen Glasscheiben oder durch Beimischen dieser Haftvermittler in die intumeszierende Zusammensetzung gefördert wird.

9. Verfahren nach Anspruch 8, wobei die Haftvermittler Silane oder Silane mit funktionellen Gruppen vom Typ der Aminosilane sind.

10. Verfahren zur Herstellung einer feuerfesten Verglasung nach einem der vorhergehenden Ansprüche, wobei die intumeszierende Schicht aus Folgendem gebildet wird:
- entweder ausgehend von einer Alkalihydroxidlösung, der eine wässrige Suspension von Siliziumdioxid zugesetzt wird, deren Teilchen die geeignete Teilchengröße aufweisen;
- oder ausgehend von einer Alkalisilikatlösung, der eine Menge von wässriger Suspension von Siliziumdioxid zugesetzt wird, deren Teilchen die geeignete Teilchengröße aufweisen;
- oder ausgehend von einer Zusammensetzung, die zum Teil eine Alkalisilikatlösung, zum Teil eine Alkalihydroxidlösung, aufweist, denen eine wässrige Suspension von Siliziumdioxid zugesetzt wird, deren Teilchen die geeignete Teilchengröße aufweist.

11. Verfahren nach Anspruch 10, wobei die Zusammensetzung aus hydratisierten Alkalisilikaten, in der alle Komponenten vereint werden, auf eine horizontale Glasscheibe nach der gewünschten Dicke aufgetragen wird, wobei die Lösung zu einer Masse erstarrt gelassen wird, wobei eine zweite Glasscheibe auf die gehärtete Schicht aufgebracht wird, wobei die Anordnung durch Kalandrieren und/oder Ofentrocknung zusammengefügt wird.

12. Verfahren nach Anspruch 10, wobei die Zusammensetzung aus hydratisierten Alkalisilikaten in den Raum zwischen zwei Glasscheiben eingefüllt wird, auf deren Umfang ein abdichtendes Band angeordnet wird, wobei die Zusammensetzung in diesem Raum aushärtet.

13. Verfahren nach Anspruch 11 oder 12, wobei das Erstarrenlassen der intumeszierenden Lösung durch Erwärmen auf eine Temperatur von nicht über 80 °C beschleunigt wird.

14. Verfahren nach Anspruch 11 oder 12, wobei das Erstarrenlassen der Lösung durch Autoklavieren auf eine Temperatur von nicht über 130 °C unter einem Druck von 13 Atmosphären erhalten wird.

## Claims

1. Process for the production of a transparent fireproof glazing comprising at least one layer of intumescent material between glass sheets, in which the intumescent layer obtained without drying is a layer of hydrated alkali metal silicate with a water content of between 30 and 48% by weight, with an SiO₂/M₂O molar ratio of between 3 and 8, in the preparation of which alkali metal silicate the silica is at least partially introduced in the form of an aqueous suspension of silica particles, the mean particle size of which is greater than 50 nm and less than 150 nm and preferably less than 130 nm, in which the intumescent layer also comprises polyols in a proportion of less than 10% by weight and preferably of less than 8%.

2. Process according to the preceding claim, in which the proportion of silica added exhibiting the particle size characteristics indicated, with respect to all of the silica present in the intumescent layer, is at least 50% by weight and preferably at least 60% by weight.

3. Process according to one of the preceding claims, in which the intumescent layer exhibits a water content of between 35% and 43% by weight.

4. Process according to one of the preceding claims, in which, in the intumescent layer, the SiO₂/M₂O molar ratio of the intumescent layer is between 3.5 and 6.

5. Process according to one of the preceding claims, in which, in the intumescent layer, the alkali metal component is sodium, potassium, lithium or a mixture of several of them.

6. Process according to Claim 5, in which the alkali metal component is composed, for at least 60% by weight, of potassium and preferably at least 80%.

7. Process according to Claim 6, in which all of the alkali metal component is potassium.

8. Process according to one of the preceding claims, in which the adhesion of the intumescent layer to the glass sheets with which it is in contact is favoured by application of adhesion promoters to these sheets or by incorporation of these promoters in the intumescent composition.

9. Process according to Claim 8, in which the adhesion promoters are silanes or silanes having functional groups of the aminosilane type.

10. Process for the preparation of a fireproof glazing according to one of the preceding claims, in which the intumescent layer is formed:
- either from an alkali metal hydroxide solution to which an aqueous silica suspension, the particles of which exhibit the appropriate particle size, is added;
- or from an alkali metal silicate solution to which an amount of aqueous silica suspension, the particles of which exhibit the appropriate particle size, is added;
- or from a combination comprising partly an alkali metal silicate solution and partly an alkali metal hydroxide solution, to which solutions the silica suspension, the particles of which exhibit the appropriate particle size, is added.

11. Process according to Claim 10, in which the composition of hydrated alkali metal silicates, in which composition all the components are combined, is applied to a horizontal glass sheet according to the thickness desired, the solution being allowed to set solid, a second glass sheet being applied to the hardened layer, the combination being assembled by calendering and/or passing through an oven.

12. Process according to Claim 10, in which the composition of hydrated alkali metal silicates is poured into the space made between two glass sheets, at the periphery of which is positioned a leaktight strip, the composition hardening in this space.

13. Process according to Claim 11 or Claim 12, in which the setting of the intumescent solution is accelerated by heating at a temperature not exceeding 80°C.

14. Process according to Claim 11 or Claim 12, in which the setting of the solution is obtained by passing through an autoclave at a temperature not exceeding 130°C under a pressure of 13 atmospheres.
